# DEMANDE DE BREVET EUROPEEN

(11) **EP 2 822 131 A2**
(43) Date de publication de la demande: **07.01.2015**
(21) Numéro de dépôt: 14175157.8
(22) Date de dépôt: 01.07.2014
(51) Int. Cl.: H02H 9/04, H02H 3/02

(54) **Dispositif et procédé de protection contre des courants de fuite**

(30) Priorité: 04.07.2013 FR 1356556; 19.07.2013 US 201361856190 P
(71) Demandeur: Zodiac Aero Electric, 93100 Montreuil (FR)
(72) Inventeur: Guenot, Stéphane, 92160 Antony (FR); Aoustin, Loic, 78700 Conflans Sainte Honorine (FR); Pradier, Jean-Clair, 78800 Houilles (FR)
(74) Mandataire: Casalonga

(57) **Abrégé**

Dispositif de protection contre des courants de fuite, le dispositif étant destiné à être raccordé entre une première connexion électrique (2) et une deuxième connexion électrique (3).

Le dispositif comprend un interrupteur (5) configuré pour dériver au moins partiellement le courant circulant dans la première connexion électrique et commandé par la tension de la première connexion électrique.

## Description

L'invention concerne la protection contre des courants de fuite et en particulier les dispositifs de protection contre des courants de fuite pouvant être raccordés sur une ligne électrique en sortie d'un interrupteur de puissance.

En général on utilise des interrupteurs pour autoriser ou stopper le passage du courant entre une source et une charge à alimenter. À l'état bloqué, les interrupteurs sont destinés à supporter des tensions élevées, par exemple de l'ordre de plusieurs centaines de volts, tout en limitant l'apparition des courants de fuite. À l'état passant, les interrupteurs sont destinés à laisser passer des courants élevés, par exemple de l'ordre de plusieurs centaines d'ampères, et ce en présentant une faible tension au bornes de l'interrupteur. Aussi, les interrupteurs sont choisis pour permettre une commutation rapide, afin de réduire les pertes en commutation.

On utilise notamment des interrupteurs comprenant des composants semi-conducteurs de puissance, par exemple des transistors bipolaires à grille isolée (« IGBT : Insulated Gâte Bipolar Transistor » en langue anglaise), des transistors MOSFET, des thyristors à extinction par la gâchette (« thyristor GTO : Gâte Turn-Off Thyristor » en langue anglaise), des transistors bipolaires, des Triac, des thyristors, ou des diodes. L'utilisation de tels interrupteurs peut engendrer des capacités parasites. De ce fait, à l'état bloqué, ces interrupteurs peuvent laisser passer un courant de fuite résiduel. À la sortie de ces interrupteurs, un courant de fuite peut faire apparaître une tension dite de contact ayant une valeur élevée. Les tensions de contact peuvent être dangereuses en cas de contact entre un utilisateur et une portion conductrice en communication électrique avec la sortie de l'interrupteur.

Il convient donc de limiter les tensions de contact et donc les courants de fuite en sortie des interrupteurs. On pourra se référer aux normes IEC/TS 60479-1, IEC/TS 60479-2 et IEC60990 Rev 2 qui définissent les limites de tension de contact et de courant de fuite autorisées. En dessous de ces limites, on obtient une bonne protection des utilisateurs contre un risque électrique.

Il a été proposé d'utiliser des dispositifs de protection contre des courants de fuite, qui protègent donc également contre les tensions de contact.

Il a par exemple été proposé d'utiliser un condensateur entre la sortie d'un interrupteur et la masse électrique pour limiter les courants de fuite alternatifs. Cette solution passive a pour inconvénients de nécessiter une surface importante, et de nécessiter notamment une adaptation de la valeur de la capacité pour chaque type d'interrupteur et pour chaque application.

Il a également été proposé d'utiliser des relais électromécaniques en série avec un interrupteur semi-conducteur, les relais électromécaniques étant commandés par le circuit de commande de l'interrupteur semi-conducteur. Quand bien même cette solution permet d'obtenir une isolation galvanique parfaite et une protection qui peut fonctionner même si le circuit de commande de l'interrupteur et du relais électromécanique n'alimente plus les interrupteurs (« Fail-safe » en langue anglaise), cette solution a pour inconvénients de nécessiter une surface importante, une masse importante, d'être peu fiable, et d'avoir un coût important.

Enfin, on pourra se référer au document WO 2007/006021 qui décrit l'utilisation d'un interrupteur secondaire disposé entre la sortie d'un interrupteur dit primaire et la masse. L'interrupteur secondaire est commandé pour former un court-circuit lorsque l'interrupteur primaire est ouvert. Cet interrupteur secondaire est commandé par le circuit de commande de l'interrupteur primaire. Cette solution a notamment pour inconvénient de créer des risques de destruction des composants liés à une fermeture simultanée des deux interrupteurs. Cette solution a également pour inconvénients de nécessiter un interrupteur secondaire dimensionné pour pouvoir résister à une élévation de tension due à la foudre et de nécessiter une alimentation pour fonctionner. En d'autres termes ce dispositif n'est pas « fail-safe » selon une terminologie bien connue de l'homme du métier désignant un fonctionnement assuré malgré la défaillance d'un composant.

L'invention a donc pour but d'améliorer la protection contre les courants de fuite et d'obtenir un dispositif peu encombrant et plus sûr.

Selon un aspect de l'invention, il est proposé un dispositif de protection contre des courants de fuite, le dispositif étant destiné à être raccordé entre une première connexion électrique et une deuxième connexion électrique.

Le dispositif comprend un interrupteur configuré pour dériver au moins partiellement le courant circulant dans la première connexion électrique et commandé par la tension de la première connexion électrique.

On peut notamment raccorder ledit dispositif en sortie d'un interrupteur, par exemple un interrupteur susceptible de laisser passer des courants de fuite. La première connexion électrique correspond alors à la ligne électrique disposée après l'interrupteur, la deuxième connexion électrique pouvant correspondre au neutre électrique.

Alors que dans l'art antérieur on utilise des dispositifs commandés par des tensions qui proviennent d'autres circuits électroniques qui sont eux-mêmes alimentés, ici, c'est le niveau de tension de la première connexion qui commande l'ouverture et la fermeture de l'interrupteur. Plus précisément, si une tension apparaît sur la première connexion électrique, alors on peut utiliser cette tension pour fermer ledit interrupteur et permettre une dérivation au moins partielle du courant. Contrairement à l'art antérieur, on peut ne pas utiliser de relais électromécaniques ou de condensateurs, on obtient donc un dispositif peu encombrant.

Aussi, en dérivant au moins partiellement le courant, il est possible d'avoir un dispositif de protection qui fonctionne dès lors qu'une tension apparaît sur la première connexion électrique, cette tension pouvant être une tension d'alimentation du à la fermeture d'un interrupteur disposé en amont sur la première connexion électrique ou à des courants de fuite faisant apparaître une tension. En effet, puisque le courant dérivé est limité, on peut obtenir un fonctionnement normal pour une charge qui serait connectée aux connexions électriques.

La dérivation partielle du courant est différente des solutions de l'art antérieur dans lesquelles on met directement à la masse la connexion électrique.

L'interrupteur peut être configuré pour être fermé lorsque la tension de la première connexion électrique dépasse une valeur de seuil.

On peut notamment fixer cette valeur de seuil à 5 volts, pour pouvoir respecter les normes énoncées ci-dessus concernant les tensions de contact. En dérivant partiellement du courant si la tension dépasse 5 V on peut abaisser la tension sur la première connexion électrique et obtenir une tension qui n'est pas dangereuse pour un utilisateur.

L'interrupteur peut être un transistor MOSFET, par exemple un MOSFET à canal de conduction de type N, la grille du transistor étant reliée à la première connexion électrique au moyen d'une résistance, et le drain du transistor est relié à la première connexion.

Ainsi le drain et la grille du transistor sont connectés à travers cette résistance et la tension de la première connexion électrique permet de commander le transistor et de permettre le passage du courant en appliquant simultanément une tension de grille et une tension drain-source.

Le dispositif peut comprendre un circuit de limitation du courant circulant dans l'interrupteur.

On peut ainsi avoir un dispositif qui fonctionne en permanence, et on peut avoir un courant qui traverse le transistor inférieur par exemple à 6 milliampères efficace. On respecte ainsi les normes IEC/TS 60479-1 et IEC/TS 60479-2. On obtient alors une protection contre les agressions par la foudre puisque le courant qui circule à travers le dispositif est limité.

Le circuit de limitation du courant peut comprendre un transistor bipolaire et une résistance de limitation, le collecteur du transistor bipolaire étant relié à la grille du transistor MOSFET et la base du transistor bipolaire étant commune à la résistance de limitation et à la source du transistor MOSFET.

Ainsi c'est directement la tension de la première connexion électrique qui va contrôler l'interrupteur, ici un transistor MOSFET, et donc également le transistor bipolaire pour ensuite limiter le courant traversant l'interrupteur. Si l'interrupteur est un transistor, le circuit de limitation permet d'abaisser la tension de grille de ce transistor et donc, par contre-réaction, de limiter le courant qui circulera à travers ce transistor.

A titre d'exemple, le courant peut être limité par le rapport entre la résistance de limitation et la tension base-émetteur en saturation du transistor bipolaire.

L'interrupteur peut être configuré pour être fermé et dériver au moins partiellement le courant circulant dans la première connexion électrique dans un premier mode de commande du dispositif et pour être ouvert dans un deuxième mode de commande du dispositif, le dispositif comprenant en outre une résistance formant une impédance d'entrée du dispositif dans le deuxième mode de commande.

La résistance formant une impédance d'entrée du dispositif peut être par exemple la résistance disposée entre la grille du transistor formant l'interrupteur et la première connexion électrique.

Alors que dans l'art antérieur on a un mode de commande dans lequel le dispositif forme un court-circuit et un autre mode de commande dans lequel le dispositif forme un circuit ouvert, ici, on utilise une résistance pour limiter fortement la dérivation de courant et permettre l'alimentation d'une charge connectée aux connexions électriques. À titre d'exemple, on peut utiliser des résistances ayant des valeurs de résistance de l'ordre de la centaine de kilo-ohms, par exemple supérieures à 500 kilo-ohms.

Le dispositif peut comprendre une entrée configurée pour recevoir un signal de commande, le dispositif étant configuré pour être dans le premier mode de commande lorsque la tension du signal de commande est nulle.

En outre d'être commandé par la tension de la première connexion électrique, le dispositif peut être automatiquement dans le premier mode de commande en utilisant un signal de commande dont la tension est nulle. Si par exemple on utilise un microcontrôleur pour choisir le mode de commande, alors n'obtient une protection contre les courants de fuite quand bien même ce microcontrôleur est défectueux ou non-alimenté. On obtient donc un fonctionnement « fail-safe ».

Le dispositif peut comprendre un optocoupleur connecté à ladite entrée configurée pour recevoir un signal de commande. L'optocoupleur peut alors être configuré pour être bloqué dans le premier mode de commande et passant dans le deuxième mode de commande.

En étant passant, l'optocoupleur peut par exemple court-circuiter la commande de l'interrupteur. En effet si l'interrupteur est un transistor on peut court-circuiter sa grille pour empêcher son ouverture si une tension apparaît sur la première connexion électrique, le dispositif présentant alors ladite résistance comme impédance d'entrée, ce qui permet d'alimenter une charge connectée en aval aux connections électriques.

Le dispositif peut comprendre un circuit redresseur disposé en entrée du dispositif et connecté à la première et à la deuxième connexion électrique.

On peut ainsi traiter des courants de fuite alternatifs.

Selon un autre aspect de l'invention, il est proposé un procédé de protection contre des courants de fuite au moyen du dispositif tel que défini ci-dessus, dans lequel une charge est raccordée à la première et à la deuxième connexion électrique.

Selon une caractéristique générale du procédé, on commande le dispositif pour qu'il fonctionne dans le premier mode de commande lorsque ladite charge ne doit pas fonctionner, et on commande le dispositif pour qu'il fonctionne dans le deuxième mode de commande lorsque ladite charge doit fonctionner.

D'autres avantages et caractéristiques de l'invention apparaîtront à l'étude de la description suivante, prise à titre d'exemple non limitatif et illustrée par les dessins annexés sur lesquels:

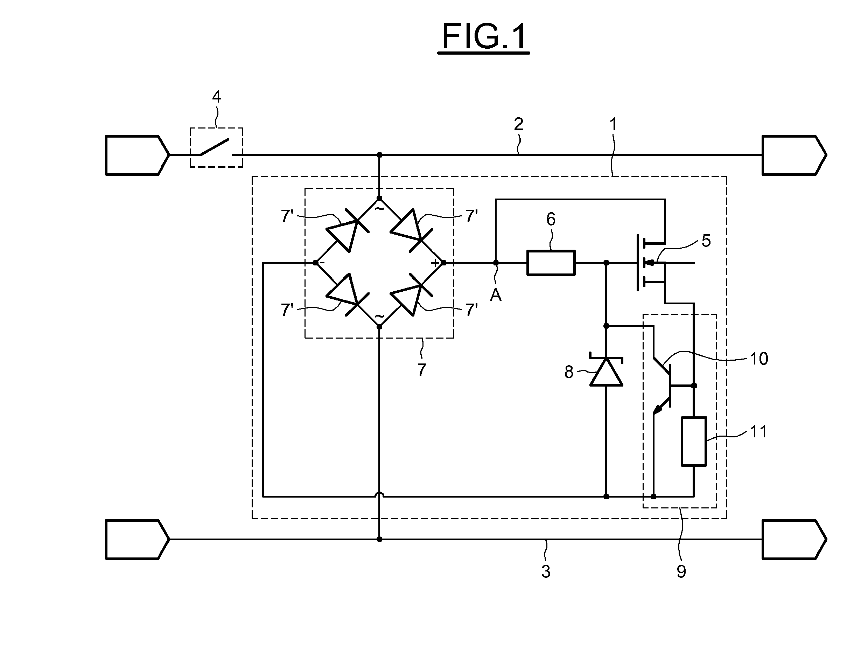

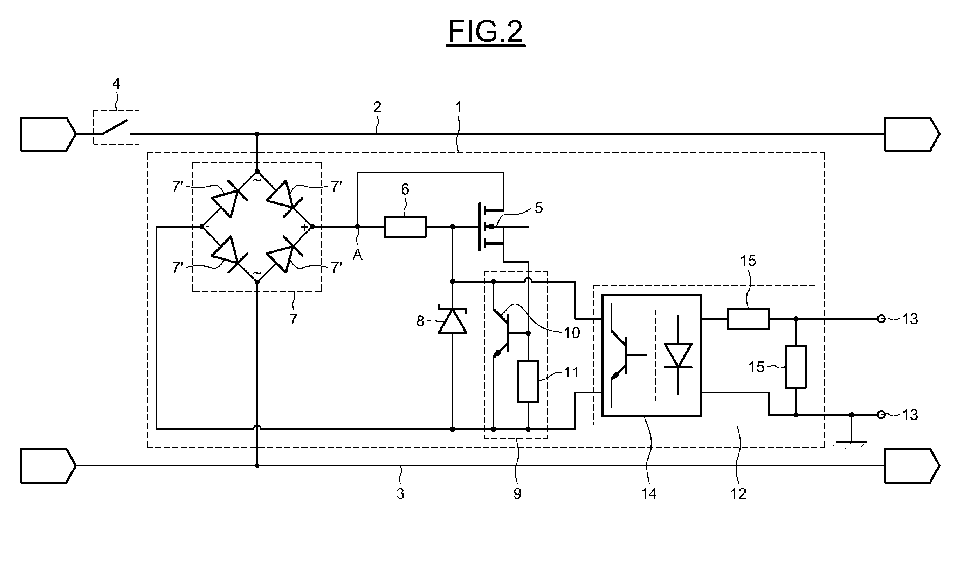

- les figures 1 et 2 illustrent deux variantes de modes de réalisation de l'invention.

Sur la figure 1, on a représenté schématiquement un dispositif 1 de protection contre des courants de fuite, qui permet donc d'empêcher l'apparition de tensions de contact. Le dispositif 1 est raccordé à une première connexion électrique 2 et à une deuxième connexion électrique 3, la première connexion électrique 2 étant connectée à la sortie d'un interrupteur 4. La première connexion électrique 2 peut correspondre à une phase électrique, et la deuxième connexion électrique 3 peut correspondre au neutre électrique. L'interrupteur 4 peut-être un interrupteur comprenant des composants semi-conducteurs qui laissent passer des courants de fuite à cause de leurs capacités parasites. On utilise donc le dispositif 1 pour abaisser la tension de sortie de l'interrupteur 4 pour obtenir des tensions sans risques pour les utilisateurs.

A titre indicatif, on peut utiliser le dispositif 1 pour la protection contre des courants de fuite dans le raccordement d'une charge qui peut être par exemple un appareil électrique à alimenter au sein d'un aéronef.

Le dispositif 1 comprend notamment un transistor 5 commandé pour dériver le courant circulant dans la première connexion 2, par exemple un transistor MOSFET à canal de conduction de type N. Le drain et la grille du transistor 5 sont reliés au moyen de la résistance 6 au point A. Ainsi, lors de l'apparition d'une tension sur la première connexion électrique 2 on a simultanément une élévation de la tension drain-source du transistor 5 et de la tension de grille de ce transistor. Le transistor 5 est alors commandé pour dériver du courant depuis la première connexion électrique 2.

On peut choisir un transistor 5 dont la tension de seuil est inférieure à 5 Volts, pour dériver le courant dès lors que la tension sur la première connexion électrique 2 dépasse un seuil par exemple de 5 Volts. En effet, la limitation de la tension de contact à 5 Volts permet de réduire grandement le risque d'atteinte physique pour toute personne pouvant être amenée à entrer en contact avec les connexions électriques 2 et 3.

Le dispositif 1 comprend également un pont redresseur 7 disposé en entrée du dispositif 1 et connecté directement par une de ses bornes à la première connexion électrique 2 et à la connexion électrique 3 ainsi que par une autre de ses bornes au point A. Ce pont redresseur permet de commander le transistor pour dériver les courants de fuite alternatifs. Le pont redresseur 7 comprend quatre diodes 7' formant un pont redresseur. On peut noter que les courants de fuite dérivés par le transistor 5 sont redirigés à travers le pont redresseur 7 vers la deuxième connexion électrique 3 qui peut être le neutre.

Afin de protéger la grille du transistor 5, on peut connecter une diode 8 à cette grille.

Le dispositif 1 comprend un circuit de limitation 9 du courant circulant dans le transistor 5. Ce circuit de limitation comprend un transistor bipolaire 10 et une résistance 11. En limitant le courant traversant le transistor 5, on peut obtenir un dispositif 1 qui fonctionne en permanence, notamment quand l'interrupteur 4 est fermé et qu'une charge est alimentée par les première et deuxième connexions électriques 2 et 3. En limitant le courant qui est dérivé dans le dispositif, le dispositif subit de très faibles contraintes électriques lors d'agressions de type foudre.

La limitation obtenue par le circuit 9 est mise en oeuvre en commandant le transistor 10 pour abaisser la tension de grille du transistor 5. Cette limitation est mise en oeuvre automatiquement quand la base du transistor 10 reçoit du courant du transistor 5. On obtient donc, en outre d'une régulation par la tension de la première connexion électrique 2, une régulation par le courant qui est dérivé.

Bien qu'il soit possible d'utiliser un dispositif 1 qui dérive en permanence du courant, par exemple des courants de fuite depuis la première connexion électrique 2, on peut également commander le dispositif 1 pour que cette dérivation ne soit mise en oeuvre que lorsque l'interrupteur 4 est fermé donc passant.

Sur la figure 2, on a représenté de manière schématique une variante selon l'invention dans laquelle le dispositif 1 est commandable. Cette commande peut par exemple provenir d'un microcontrôleur, non représenté sur cette figure, qui commande également l'interrupteur 4.

Dans cette variante, le dispositif 1 comprend un circuit de commande 12 munie d'une entrée 13 configurée pour recevoir un signal de commande. Le circuit de commande 12 comprend notamment un optocoupleur 14 et des résistances d'adaptation de la tension 15. L'optocoupleur 14 est connecté au reste du circuit du dispositif 1 par une connexion électrique traversant l'optocoupleur, allant d'une part à la grille du transistor 5 et d'autre part à un point du circuit redresseur 7, destinée à laisser circuler les courants vers la deuxième connexion électrique 3.

Lorsque la tension du signal de commande reçue par le circuit de commande 12 est nulle, l'optocoupleur 14 n'est pas passant, plus précisément, la sortie de l'optocoupleur 14 n'est pas passante, et le dispositif 1 fonctionne comme le dispositif décrit en se référant à la figure 1 : les courants de fuite sont dérivés à travers le transistor 5 qui est commandé par la tension de la première connexion électrique 2, et le courant qui traverse de ce transistor 5 est limité par le circuit de limitation 9.

Lorsque la tension du signal de commande reçue par le circuit de commande 12 est positive, la connexion électrique traversant l'optocoupleur 14 est passante et la grille du transistor 5 est court-circuitée. Le dispositif 1 vu depuis la première connexion électrique 2 présente alors une impédance d'entrée correspondant à la résistance 6 et le dispositif 1 n'est alors pas considéré comme étant actif : il n'y a pas de dérivation du courant. On pourra choisir une résistance 6 ayant une valeur de résistance de l'ordre de plusieurs centaines de kilo-ohms, par exemple une valeur supérieure à 500 kilo-ohms.

Comme indiqué ci-avant, c'est lorsque le signal de commande est nul que le dispositif 1 est considéré comme étant actif et que l'on obtient une protection contre les courants de fuite. On n'obtient un fonctionnement « fail-safe », qui protégera les utilisateurs contre les courants de fuite même en cas de défaillance d'un microcontrôleur qui produit le signal de commande.

Lorsque l'interrupteur 4 est fermé, on peut rendre inactif le dispositif 1 en envoyant un signal non nul au circuit de commande 12.

Alors que dans l'art antérieur une telle commande peut présenter des risques lorsque l'on ferme interrupteur dit primaire simultanément à un interrupteur dit secondaire destiné à dériver les courants de fuite, ici, l'utilisation d'un circuit de limitation 9 permet d'empêcher l'apparition d'un court-circuit à travers le dispositif 1 lorsqu'une charge doit être alimentée par les connexions électriques 2 et 3.

Grâce à l'invention, on obtient une meilleure protection contre les courants de fuite et donc contre l'apparition des tensions de contact, et on obtient un dispositif plus sûr, notamment contre les tensions apparaissant à cause de la foudre, et également dans un mode de réalisation contre les pannes d'un appareil externe commandant le dispositif de protection.

On peut également noter que grâce à l'invention, on obtient un dispositif peu encombrant, qui peut fonctionner sans relais électromécanique et sans condensateurs.

Enfin, l'invention peut être adaptée sur tout type de connexions électriques, le dimensionnement des composants étant par exemple fait pour correspondre aux normes de protection des utilisateurs indépendamment du courant qui circule dans les connexions et de la charge placée en aval.

## Revendications

1. Dispositif de protection contre des courants de fuite, le dispositif étant destiné à être raccordé entre une première connexion électrique (2) et une deuxième connexion électrique (3), **caractérisé en ce que** le dispositif comprend un interrupteur (5) configuré pour dériver au moins partiellement le courant circulant dans la première connexion électrique et commandé par la tension de la première connexion électrique.

2. Dispositif selon la revendication 1, dans lequel l'interrupteur (5) est configuré pour être fermé lorsque la tension de la première connexion électrique dépasse une valeur de seuil.

3. Dispositif selon la revendication 1 ou 2, dans lequel l'interrupteur (5) est un transistor MOSFET, la grille du transistor étant reliée à la première connexion électrique au moyen d'une résistance (6), et le drain du transistor est relié à la première connexion.

4. Dispositif selon l'une quelconque des revendications précédentes, comprenant un circuit de limitation (9) du courant circulant dans l'interrupteur.

5. Dispositif selon la revendication 3 ou 4, dans lequel le circuit de limitation du courant (9) comprend un transistor bipolaire (10) et une résistance de limitation (11), le collecteur du transistor bipolaire étant relié à grille du transistor MOSFET et la base du transistor bipolaire étant commune à la résistance de limitation et à la source du transistor MOSFET.

6. Dispositif selon l'une quelconque des revendications précédentes, dans lequel l'interrupteur (5) est configuré pour être fermé et dériver au moins partiellement le courant circulant dans la première connexion électrique dans un premier mode de commande du dispositif et pour être ouvert dans un deuxième mode de commande du dispositif, le dispositif comprenant en outre une résistance (6) formant une impédance d'entrée du dispositif dans le deuxième mode de commande.

7. Dispositif selon la revendication 6, comprenant une entrée configurée pour recevoir un signal de commande (13), le dispositif étant configuré pour être dans le premier mode de commande lorsque la tension du signal de commande est nulle.

8. Dispositif selon la revendication 7, comprenant un optocoupleur (14) connecté à ladite entrée configurée pour recevoir un signal de commande (13) et configuré pour être bloqué dans le premier mode de commande et passant dans le deuxième mode de commande.

9. Dispositif selon l'une quelconque des revendications précédentes, comprenant un circuit redresseur (7) disposé en entrée du dispositif et connecté à la première (2) et à la deuxième connexion électrique (3).

10. Procédé de protection contre des courants de fuite au moyen du dispositif selon l'une quelconque des revendications 6 à 9, dans lequel une charge est raccordée à la première (2) et à la deuxième connexion électrique (3), **caractérisé en ce que** l'on commande le dispositif pour qu'il fonctionne dans le premier mode de commande lorsque ladite charge ne doit pas fonctionner, et on commande le dispositif pour qu'il fonctionne dans le deuxième mode de commande lorsque ladite charge doit fonctionner.
